Europäisches Patentamt

European Patent Office

Office européen des brevets

(11) Numéro de publication : **0 497 649 A1**

(12)

# DEMANDE DE BREVET EUROPEEN

(21) Numéro de dépôt : **92400126.6**

(22) Date de dépôt : **17.01.92**

(51) Int. Cl.⁵ : **G01N 21/89**

(30) Priorité : **25.01.91 FR 9100859**

(43) Date de publication de la demande :
**05.08.92 Bulletin 92/32**

(84) Etats contractants désignés :
**DE FR GB IT**

(71) Demandeur : **THOMSON-CSF**
**51, Esplanade du Général de Gaulle**
**F-92800 Puteaux (FR)**

(72) Inventeur : **Pepin, Christian**
**THOMSON-CSF, SCPI, Cédex 67**
**F-92045 Paris la Défense (FR)**
Inventeur : **Audion, Marc**
**THOMSON-CSF, SCPI, Cédex 67**
**F-92045 Paris la Défense (FR)**

(74) Mandataire : **Turlèque, Clotilde et al**
**THOMSON-CSF SCPI**
**F-92045 PARIS LA DEFENSE CEDEX 67 (FR)**

(54) **Procédé et dispositif de contrôle de l'état de surface d'un élément optique de transmission lumineuse.**

(57)   L'invention concerne un procédé et un dispositif pour le contrôle de la qualité de surface d'un élément optique de transmission, en particulier d'un hublot d'équipement optronique d'observation visible et/ou infrarouge.

Le procédé consiste à émettre dans l'élément optique un flux lumineux marqué et confiné à l'intérieur de cet élément, et à mesurer le flux lumineux marqué émergeant de l'élément à contrôler en présence de défauts de surface. Le dispositif de mise en oeuvre comporte un générateur de signaux de modulation (1), une source de lumière (2) qui injecte un flux modulé dans l'élément optique à contrôler (3), un détecteur de lumière (16), et un détecteur synchrone (7) pour extraire et mesurer le signal modulé.

Application au contrôle de la qualité de transmission et au repérage d'un élément optique défectueux dans un système optique complexe.

FIG. 2

L'invention concerne le contrôle de la qualité de surface des éléments optiques de transmission de la lumière et, plus particulièrement, un procédé et un dispositif pour le contrôle de l'état de surface des hublots d'équipements optroniques embarqués à bord d'un avion.

Pour l'acquisition et la poursuite de cible, les systèmes d'armes aéroportés utilisent des équipements optroniques d'imagerie infrarouge et/ou visible montés sur des avions. Un tel équipement optronique possède un hublot pour isoler et protéger' les parties optiques fragiles (lentilles d'entrée, miroirs de déviation de la ligne de visée, miroirs de séparation de voies optiques, ...) de l'atmosphère externe. Le choix du matériau constituant un tel hublot est alors conditionné par deux impératifs :

– d'une part, assurer la transmission de la lumière dans la ou les bandes spectrales de fonctionnement de l'équipement optronique (infrarouge et/ou visible)

– d'autre part, présenter de bonnes qualités de dureté et d'état de surface afin de résister aux contraintes engendrées par le vol à grande vitesse dans un environnement hostile (particules en suspension, aérosols, pluies, ...).

Les matériaux actuellement sélectionnés (ZnSe, ZnS, ZnSe/ZnS en couches successives ) restent très sensibles au phénomène d'usure engendré, en particulier, par la pluvio-érosion. Or l'évolution dans le temps de cette usure dépendant essentiellement des conditions de vol rencontrées, il s'avère impossible de prévot, a priori, une périodicité standard de remplacement du hublot.

Afin de définir la durée d'utilisation de chaque hublot, au-delà de laquelle l'usure du hublot nuirait aux performances de l'équipement optronique, en rendant son utilisation opérationnelle délicate voire impossible, il est d'usage de procéder à un examen visuel de l'état de surface du hublot. Cet examen, guidé par des estimations subjectives, conclut le plus souvent prématurément à l'usure du hublot et donc à sa dépose, ce qui accroît sensiblement le coût de la maintenance.

Pour pallier ces inconvénients, l'invention consiste à réaliser une mesure objective de l'état d'usure d'un hublot ou, plus généralement, de tout élément optique de transmission lumineuse. Cette mesure est basée sur l'exploitation de l'effet de confinement de la lumière, qui s'établit dans les éléments optiques dans certaines conditions d'introduction de cette lumière, combiné au phénomène de diffusion de la lumière provoquée par la présence de zones endommagées. Ainsi, un flux lumineux, normalement confiné dans l'élément optique lorsque cet élément ne présente pas de défauts, diffuse et émerge partiellement de cet élément lorsque des défauts apparaissent ; la mesure de l'intensité du flux émergeant traduit alors le niveau d'usure de l'élément optique à contrôler.

Plus précisément, l'invention propose un procédé de contrôle de l'état de surface d'au moins un élément optique de transmission de la lumière dans une bande spectrale donnée, cet élément comportant deux faces externes principales ayant des courbures telles que ces faces s'écartent peu d'une surface principale moyenne, caractérisé en ce qu'il comporte les étapes successives suivantes :

– émettre dans l'élément optique un flux lumineux marqué de fréquence située dans la bande spectrale et confiné à l'intérieur de l'élément optique en l'absence de défauts ;

– détecter un flux lumineux émergeant de l'élément optique ;

– extraire du signal associé au flux lumineux émergeant la composante marquée et caractéristique de l'état de surface de l'élément optique.

L'invention concerne également un dispositif de mise en oeuvre d'un tel procédé.

D'autres caractéristiques et avantages de l'invention apparaîtront à la lecture de la description qui suit, en référence aux figures représentant respectivement :

– les figures 1a et 1b, deux schémas illustrant l'effet de confinement de la lumière, respectivement dans un hublot à surfaces planes et dans un hublot à surfaces courbes ;

– la figure 2, un schéma fonctionnel du dispositif de contrôle selon l'invention ;

– les figures 3a à 3d, des schémas illustrant différents modes d'injection du signal lumineux modulé.

Un hublot est un élément optique à faces principales parallèles qui transmet au système optronique d'imagerie le flux lumineux provenant de l'extérieur et appartenant à une bande spectrale donnée. Cette transmission est quasi totale quel que soit l'angle d'incidence des rayons lumineux et n'est limitée que par la qualité des traitements anti-reflets des faces du hublot. Le confinement de rayons se propageant à l'intérieur d'un tel élément optique ne peut en effet se produire que lorsque de tels rayons ont une incidence sur une face selon un angle supérieur à l'angle de réflexion totale, ce qui est impossible pour un rayon provenant de l'extérieur.

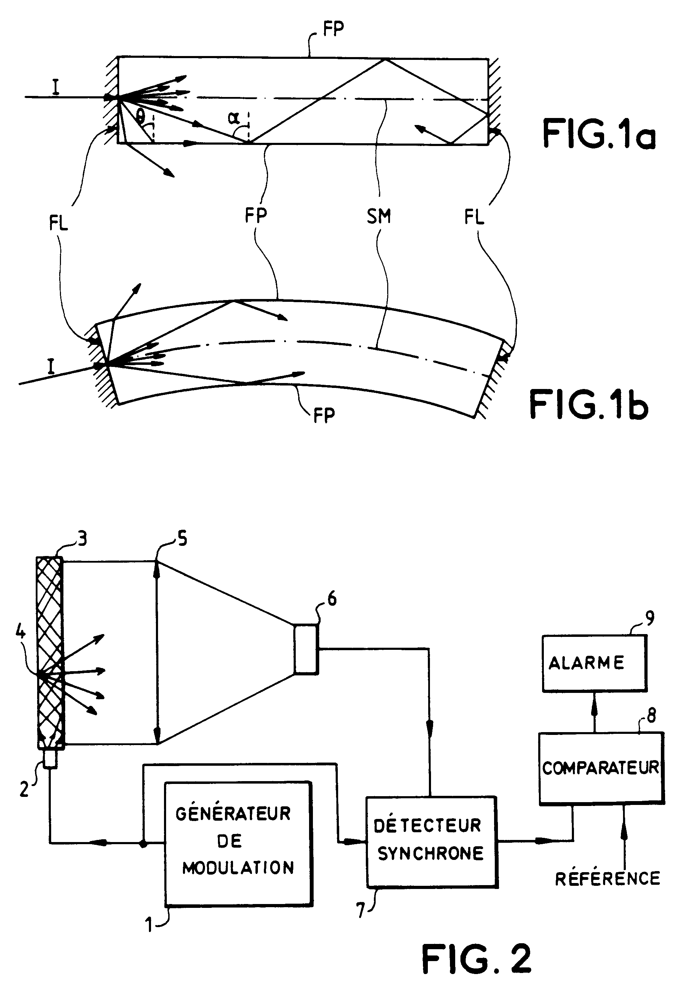

Cependant, l'effet de confinement est utilisé dans le cadre de l'invention à partir d'un flux lumineux supplémentaire dont la direction de propagation particulière résulte du mode d'introduction de ce flux, tel qu'illustré aux figures 1a et 1b ; ces figures représentent, en coupe, un hublot à faces principales FP respectivement planes ou courbes, le hublot ayant des faces latérales FL. Les faces latérales FL étant rendues réfléchissantes, un flux lumineux, émis par une face latérale selon un direction de propagation approximativement parallèle aux faces principales FP, c'est-à-dire approxiativement parallèle à une surface principale moyenne SM, reste guidé à l'intérieur du hublot. En effet, dans ce cas, les angles d'incidence des rayons lumineux sur les faces principales sont en général supérieurs à l'angle de réflexion critique θ, du fait de la différence d'indice entre le hublot et l'air et d'après les lois de l'optique géométrique. Par exemple, les angles de réflexion critique pour le verre, le sulfure de zinc et le germanium sont, respectivement, 42°, 26° et 15°.

L'invention exploite cet effet de confinement d'un flux lumineux émis latéralement par un hublot en bon état, et l'effet de fuite optique par diffusion de ce même flux par un hublot dégradé. En effet, lorsque des défauts apparaissent, le flux émis latéralement diffuse sur ces défauts provoquant l'apparition de rayons se propageant dans diverses directions ; certains de ces rayons vont pouvoir émerger du hublot du fait de leur direction de propagation, leur angle d'incidence sur la face principale opposée étant inférieure à l'angle de réflexion critique θ. La présence d'un flux émergeant met alors en évidence la présence de défauts. Pour recueillir et mesurer le flux lumineux diffusé provenant seulement du flux émis latéralement, sans devoir occulter le flux lumineux provenant de la scène extérieure à l'équipement, le flux lumineux injecté est marqué, par exemple par modulation temporelle, afin de pouvoir être facilement identifié et séparé du flux lumineux extérieur.

La figure 2 représente schématiquement un exemple de réalisation d'un dispositif de contrôle mettant en oeuvre le procédé qui vient d'être exposé. Un flux lumineux, modulé, par exemple alternativement, par un générateur de signaux de modulation 1, est émis par une source 2 couplée à une entrée de commande du générateur 1, puis injecté dans le hublot 3 par l'une de ses faces latérales. LP flux lumineux modulé, diffusé au niveau d'un défaut de surface, tel que celui référencé 4 sur la figure, émerge du hublot 3 et est focalisé par une lentille 5, puis est recueilli par un détecteur de lumière 6 ; le niveau de son intensité est mesuré à l'aide d'un détecteur synchrone 7 couplé au détecteur de lumière 6 et au générateur de signaux 1. En sortie du détecteur synchrone 7, l'amplitude du signal représentant l'intensité relative du flux modulé émergeant du hublot est appliqué à un comparateur 8 pour être comparé à une valeur de référence ; lorsque l'amplitude mesurée est supérieure à la valeur de référence, une alarme 9 couplée au comparateur 8 est déclenchée.

Après traversée du hublot 3, le flux lumineux incident sur le détecteur de lumière 6 se compose du flux extérieur provenant de la scène observée auquel se superpose, en cas de présence de défauts du hublot, un flux modulé alternativement. Le détecteur 6 traduit le niveau d'intensité du flux lumineux incident en un niveau de signal électrique. Le détecteur synchrone 7 permet d'extraire un signal proportionnel à la composante alternative du flux lumineux incident sur le détecteur de lumière 6, cette composante étant synchrone de la modulation appliquée au flux émis par la source 2.

Deux variantes se présentent alors :
– ou bien le détecteur 6 est un détecteur spécifique au dispositif de contrôle de qualité effectué dans le cadre de l'invention,
– ou bien le détecteur 6 est le détecteur de la caméra d'imagerie (TV ou IR) de l'équipement optronique dans le cas où ce détecteur est sensible à la fréquence émise par la source modulée 2.

Lorsque le détecteur 6 est un détecteur spécifique, par exemple une diode photoréceptrice, sa bande de réception inclut la fréquence du flux modulé, de l'ordre du kHz ou plus, et est choisie suffisamment étroite pour que le détecteur reste insensible aux fréquences nettement inférieures de variation du flux extérieur. Dans ces conditions, le détecteur 6 est sensible au seul flux modulé émergeant et délivre un signal représentant seulement ce flux ; le détecteur synchrone 7 est alors constitué par un simple multiplieur fournissant alors, par détection synchrone, un niveau de signal proportionnel à l'intensité du flux modulé émergeant du signal de modulation initial.

Le second cas est celui où le détecteur 6 est le détecteur de la caméra de l'équipement optronique, par exemple une mosaïque d'éléments photosensibles dans le domaine infrarouge constitués d'un matériau semi-conducteur et associés à un dispositif à transfert de charges (en abrégé DTC). Le signal de luminance fourni par ce détecteur se compose d'un signal modulé, correspondant au flux modulé émergeant, superposé au signal d'imagerie résultant du flux lumineux externe provenant de la scène observée. Afin de séparer ces deux signaux et de fournir un signal caractéristique du flux modulé émergeant, une détection synchrone est effectuée par le détecteur synchrone 7 à l'aide d'un multiplieur, par exemple un modulateur en anneau, suivi d'un filtre passe-bas. La fréquence de modulation du flux émis par la source 2 est alors calée sur un sous-multiple de la fréquence image de la caméra (50 Hz). Une modulation en "tout ou rien", à partir de signaux carrés, est également envisageable, ce qui simplifie le circuit multiplieur, composé alors de portes analogiques, et supprime le flux modulé dans l'image de la caméra pour ne pas perturber son exploitation par un opérateur.

Le niveau du signal fourni par le détecteur synchrone 7 est comparé à un niveau de référence dans le comparateur 8. Ce niveau de référence est une valeur établie préalablement par étalonnage, dans les mêmes conditions spécifiques d'environnement et de montage, à l'aide d'un hublot témoin ayant un degré de dégradation de surface critique, en ce sens qu'il diminuera sérieusement l'efficacité de l'équipement optronique lors d'une prochaine mission.

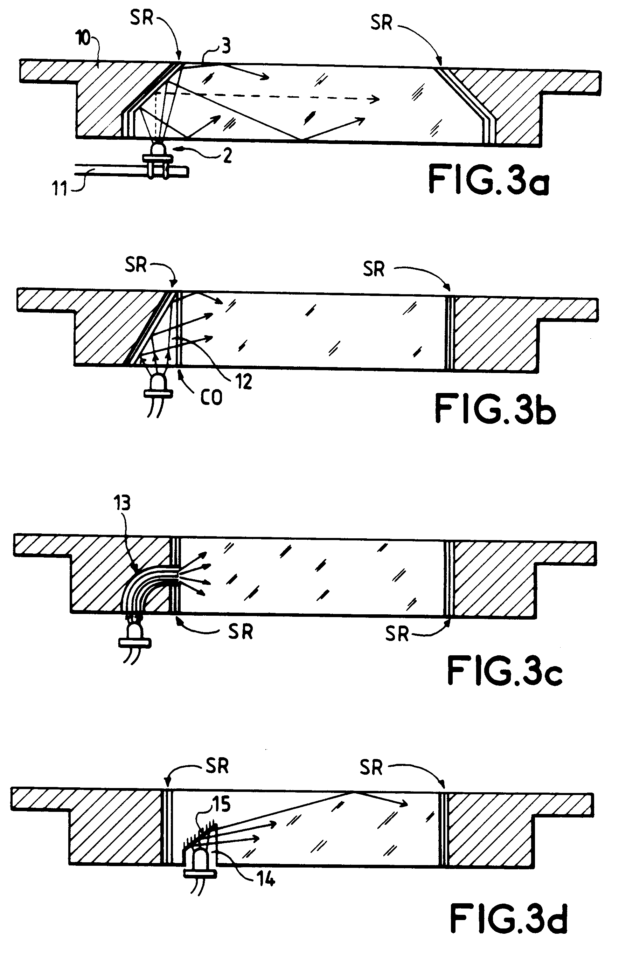

En ce qui concerne le montage entre la source de lumière et le hublot, plusieurs exemples de réalisation sont décrits ci-après, en référence aux figures 3a à 3d. Le hublot étant monté dans une monture 10 assurant son interchangeabilité, la source de lumière 2 doit être séparée du hublot 3 ; ainsi, les solutions présentées sont compatibles avec la démontabilité du hublot car dans ces montages, la source de lumière reste liée à l'équipement. Par exemple, dans le cas d'un hublot biseauté, tel que celui schématisé sur la figure 3a, la diode 2 servant de source de lumière est montée sur un circuit imprimé 11 séparé de la monture et qui intègre également d'autres composants électroniques (par exemple le générateur de signaux de modulation) ; les surfaces latérales sont d'autre part recouvertes de surfaces réfléchissantes SR. Pour un hublot droit, trois exemples de réalisation sont représentés sur les figures 3b à 3d : ainsi sur la figure 3b, le couplage optique entre la diode 2 et le hublot 3 est obtenu à l'aide d'un prisme 12 collé à la monture à l'aide d'une colle CO à adaptation d'indice ; sur les figures 3c et 3d, l'injection du flux émis par la diode 2 est effectuée, respectivement, de manière indirecte à l'aide d'un faisceau de fibres optiques 13, et, de manière directe, à l'aide d'un trou borgne 14 pratiqué dans le hublot 3 avec une surface principale 15 inclinée et réfléchissante. Ces diverses solutions présentent l'avantage de permettre un démontage du hublot par l'avant.

La mesure de l'état de surface du hublot selon l'invention est une procédure de contrôle qui peut être déclenchée soit à la demande de l'opérateur, soit de manière automatique, à chaque mise en route de l'équipement ou périodiquement selon une fréquence préréglée ou ajustée par l'opérateur.

Le champ d'application de l'invention n'est pas limité aux hublots d'équipement optronique aéroporté : en effet, elle est applicable à la mesure du degré d'usure ou de dégradation de tout élément optique de transmission dans lequel on peut définir une surface principale moyenne pour la direction d'émission du flux marqué, que cet élément comporte ou non des surfaces latérales. De plus, dans le cas des systèmes optiques complexes, elle s'applique à la localisation des éléments optiques défectueux de ces systèmes en couplant une source lumineuse modulée à chaque élément optique : en sollicitant successivement chacune des sources, le dispositif selon l'invention permet alors une localisation directe du ou des éléments défectueux. Cette application concerne, par exemple, les systèmes optiques véhiculant des faisceaux laser impulsionnels de forte puissance qui sont parfois endommagés localement du fait de la localisation de l'énergie laser sur certains dioptres, la dégradation étant provoquée le plus souvent par la présence de gouttelettes d'eau de condensation par perte d'herméticité de l'équipement, 11 est à noter également que le phénomène de fuite optique de lumière par diffusion peut être dû aussi bien à la dégradation, aux défauts ou à l'usure localisée de la surface de l'élément optique contrôlé, qu'à la présence de corps étrangers, en surface ou dans la masse de l'élément optique, qui provoque le même phénomène de fuite optique : le dispositif de contrôle de l'invention mesure donc, suivant les conditions d'utilisation de l'élément optique testé, le degré d'usure et/ou de propreté de cet élément.

Le dispositif selon l'invention n'est pas limité aux modes de réalisation décrits et représentés : en particulier, lorsque l'éclairement ambiant est important, la source lumineuse 2 utilisée peut être une diode laser, le détecteur 6 sera alors équipé d'un filtre sélectif pour la raie d'émission de la diode. D'autre part, le marquage du flux émis par la source 2 peut être une modulation de tout type connu (modulations d'amplitude à bande latérale ou à double bande, avec ou sans porteuse ; modulation de fréquence, ... ) ou tout autre type de marquage optique ( par exemple, une longueur d'onde spécifique d'émission filtrée à la réception) adaptée aux caractéristiques du flux lumineux extérieur à séparer (en particulier la bande de fréquences et l'intensité de ce flux) et à celles du détecteur mis en oeuvre.

## Revendications

1 - Procédé de contrôle de l'état de surface d'au moins un élément optique de transmission d'un flux de lumière dans une bande spectrale donnée, cet élément comportant deux faces externes principales ayant des courbures telles que les faces s'écartent peu d'une surface principale moyenne, caractérisé en ce qu'il comporte les étapes successives suivantes :
   – émettre dans l'élément optique un flux lumineux marqué de fréquence appartenant à la bande spectrale et confiné à l'intérieur de l'élément optique en l'absence de défauts ;
   – détecter le flux lumineux émergeant de l'élément optique et associer à ce flux un signal électrique ;
   – extraire du signal associé au flux émergeant la composante associée au flux marqué diffusé par l'élément optique et caractéristique des défauts de l'élément optique.

2 - Procédé selon la revendication 1, caractérisé en ce que le flux lumineux est marqué par modulation.

3 - Dispositif de mise en oeuvre du procédé selon la revendication 2, caractérisé en ce qu'il comporte un générateur de signal de commande de modulation (1), une source de lumière (2) ayant une entrée de commande couplée à ce générateur pour injecter un flux de lumière modulé dans l'élément optique (3) à contrôler selon une direction proche de la surface principale moyenne de cet élément, un détecteur de lumière (6) sur lequel est focalisé à l'aide d'une lentille (5) le flux de lumière émergeant de l'élément optique (3), un détecteur synchrone (7) couplé au détecteur (6) et au générateur de modulation (1) pour extraire du signal de sortie du détecteur (6) l'amplitude de la composante associée au flux de lumière modulé et diffusé par l'élément optique (3).

4 - Dispositif selon la revendication 3, caractérisé en ce qu'il comporte un comparateur (8) couplé au détecteur synchrone (7) pour comparer l'amplitude du signal extrait par détection synchrone à un niveau de référence, le comparateur (8) déclenchant une alarme (9) lorsque le niveau du signal formé par le détecteur synchrone (7) est supérieur ou égal au niveau du signal de référence.

5 - Dispositif selon la revendication 4, caractérisé en ce que l'élément optique 3 est un hublot, en ce que le détecteur (6) est une diode photoréceptrice sensible à la longueur d'onde du flux émis par la source (2), le signal de sortie de la diode photodétectrice étant alors représentatif du flux de lumière modulé diffusé par le hublot, et en ce que le détecteur synchrone (7) est un multiplieur basse fréquence destiné à multiplier le signal de modulation initial du flux de lumière émis par la source (2) et le signal représentant le flux lumineux modulé diffusé par l'élément optique (3) et détecté par la diode photodétectrice.

6 - Dispositif selon la revendication 4, caractérisé en ce que l'élément optique (3) est un hublot d'équipement optronique aéroporté comportant un détecteur d'imagerie, en ce que le détecteur (6) est le détecteur d'imagerie de l'équipement optronique dont le signal de sortie est représentatif du flux de lumière émergeant du hublot, ce flux étant composé du flux de lumière modulé diffusé et du flux de lumière extérieur provenant de la scène observée, et en ce que le détecteur synchrone (7) comporte un modulateur couplé à un filtre passe-bas pour extraire l'amplitude du signal représentant l'intensité du flux de lumière modulé émergeant du hublot du signal détecté.

7 - Equipement optronique aéroporté comportant un hublot de réception d'un flux lumineux provenant d'une scène observée et un système d'imagerie comportant un détecteur d'image, caractérisé en ce qu'il est équipé d'un dispositif de contrôle selon l'une des revendications 4 ou 5.

8 - Dispositif de contrôle selon la revendication 3, caractérisé en ce que la source (2) est une diode laser et en ce que le détecteur 6 est équipé d'un filtre sélectif pour la longueur d'onde d'émission laser de la diode laser.

9 - Dispositif selon la revendication 3 appliqué à la localisation des éléments optiques défectueux d'un système optique complexe, caractérisé en ce que plusieurs sources injectent un flux de lumière modulé successivement dans chacun des éléments optiques.

10 - Dispositif de contrôle selon l'une des revendications 3 à 9, caractérisé en ce que l'injection du flux de lumière modulé émis par la source (2) est effectuée par un faisceau (13) de fibres optiques.

FP

I

θ α

**FIG.1a**

FL FP SM FL

I

FP

**FIG.1b**

3 5

4 6 9

ALARME

2 8

COMPARATEUR

GÉNÉRATEUR
DE
MODULATION

DÉTECTEUR
SYNCHRONE

1 7 RÉFÉRENCE

**FIG. 2**

FIG.3a

FIG.3b

FIG.3c

FIG.3d

**Office européen des brevets**

# RAPPORT DE RECHERCHE EUROPEENNE

Numero de la demande

EP 92 40 0126

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | WO-A-8 707 023 (HUGHES AIRCRAFT COMPANY) * Revendications 1-13 * | 1-3,10 | G 01 N 21/89 |
| A | EP-A-0 249 031 (ROBERT BOSCH GMBH) * Colonne 3, ligne 55 - colonne 5 * | 1-3,10 | |
| A | DE-A-3 715 798 (E. HUBER) * Colonne 3, ligne 34 - ligne 39; revendications 1-10 * | 1-3 | |
| A | DE-A-3 235 590 (FRAUNHOFER GESELLSCHAFT ZUR FORDERUNG DER ANGEWANDTEN FORSCHUNG E.V.) * Page 8, ligne 14 - ligne 21; revendications 1-8 * | 1-3,9 | |
| A | EP-A-0 319 797 (MITSUI MINING & SMELTING CO.) * Colonne 8, ligne 56 - colonne 10 * | 1,2,7 | |
| A | GB-A-2 208 433 (VEGLIA BORLETTI) | | **DOMAINES TECHNIQUES RECHERCHES (Int. Cl.5)** |
| A | GB-A-1 395 113 (STANDARD TELEPHONES AND CABLES LIMITED) | | G 01 N G 01 M |

Le présent rapport a été établi pour toutes les revendications

| Lieu de la recherche | Date d'achèvement de la recherche | Examinateur |
|---|---|---|
| LA HAYE | 06-04-1992 | VAN DEN BULCKE E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)